# EUROPÄISCHE PATENTSCHRIFT

(11) **EP 2 355 949 B1**
(45) Veröffentlichungstag und Bekanntmachung des Hinweises auf die Patenterteilung: **25.04.2018**
(21) Anmeldenummer: 09744344.4
(22) Anmeldetag: 29.10.2009
(51) Int. Cl.: B22F 9/08, B01J 2/06

(54) **VORRICHTUNG UND VERFAHREN ZUR GRANULIERUNG EINER EDELMETALLSCHMELZE**
DEVICE AND METHOD OF GRANULATING MOLTEN PRECIOUS METAL
PROCÉDÉ ET DISPOSITIF DESTINÉS À LA GRANULATION DE MÉTAL PRÉCIEUX EN FUSION

(30) Priorität: 04.11.2008 EP 08168273
(43) Veröffentlichungstag der Anmeldung: 17.08.2011
(73) Patentinhaber: Umicore AG & Co. KG, 63457 Hanau-Wolfgang (DE)
(72) Erfinder: KOENIG, Veit, 63517 Rodenbach (DE); HUBER, Andreas, 63826 Geiselbach (DE); AMEND, Bernd, 36396 Steinau (DE)
(74) Vertreter: Clauswitz, Kai-Uwe Wolfram
(86) Internationale Anmeldenummer: PCT/EP2009/007734
(87) Internationale Veröffentlichungsnummer: WO 2010/051936

(56) Entgegenhaltungen:
- DE-A1- 4 417 100
- GB-A- 125 238
- GB-A- 233 720
- GB-A- 313 652
- JP-A- 60 082 604
- US-A- 4 192 673

## Beschreibung

Die vorliegende Erfindung befaßt sich mit der Granulierung einer Metallschmelze durch Eingießen der Schmelze in Wasser.

Es sind verschiedene Vorrichtungen und Verfahren zur Granulierung von Metallschmelzen oder geschmolzenen Schlacken mit Wasser bekanntgeworden. Die Granulierung erleichtert den weiteren Transport und die Verarbeitung der Schlacken und Metalle. Die Granulierung eines Metalles ist besonders dann vorteilhaft, wenn es mit anderen Metallen zu einer Legierung verarbeitet werden soll. Dann kommt es auf eine genaue Portionierung der Metalle an, die erleichtert wird, wenn die Metalle in granulierter Form vorliegen.

Die WO 01/55462 A1 beschreibt ein Verfahren zum Raffinieren von unreinem Rohsilber. Hierbei wird unreines Rohsilber mit Salpetersäure gelaugt. Die Laugung wird an granuliertem Rohsilber durchgeführt. Hierzu wird das geschmolzene Rohsilber in Wasser granuliert. Der Vorgang der Granulierung wird nicht weiter beschrieben.

Die WO 03/106012 beschreibt ein Verfahren und eine Apparatur zur Granulierung von geschmolzenem Metall. Bevorzugt wird das Verfahren zur Granulierung von geschmolzenem Silizium eingesetzt. Die Metallschmelze wird in einem kontinuierlichen Strahl ausgegossen. Der Strahl geschmolzenen Metalls wird durch Niederdruck Gasstrahlen in Metalltropfen zerteilt, die in strömendem Wasser abgekühlt und schließlich gesammelt werden.

Die EP 0 522 844 A2 beschreibt ebenfalls eine Methode zur Granulierung von geschmolzenem Metall. Hierbei handelt es sich im wesentlichen um eine geschmolzene Silizium/Magnesium-Legierung. Das geschmolzene Metall läßt man von einer Gießrinne in einen Wassertank fallen. Der Gießstrahl wird dadurch in Tropfen zerteilt, die erstarren und die Granalien bilden. In dem Wassertank wird ein im wesentlichen gleichmäßiger Wasserstrom erzeugt, der senkrecht zum Gießstrahl von einer Seitenwand des Wassertanks ausgeht. Die Strömungsgeschwindigkeit im Wasserstrom ist geringer als 0,1 m/s.

GB 233720 und GB 313652 beschreiben ein Verfahren zur Granulierung von geschmolzenen Feststoffen in Flüssigkeiten. Dabei wird die Flüssigkeit entweder durch Rotation des Behälters oder einen mechanischen Rührer in Rotation versetzt, wobei ein Rührstrudel entsteht. Der geschmolzene Feststoff wird durch eine rotierende Platte oder einen Strahlteiler, der sich in der Vertiefung des Rührstrudels befindet, in Tröpfchen zerteilt und seitlich verschleudert, so dass die Schmelztröpfchen seitlich in die Flüssigkeit geschleudert werden und darin zu Boden sinken. Der Rührstrudel ermöglicht es, dass die Schmelztröpfchen eine größere Höhe Wasser zur Abkühlung durchlaufen als dies bei der gleichen, nicht in Rotation versetzten Wassermenge der Fall wäre.

### Gebiet der Erfindung

Die vorliegende Erfindung befaßt sich mit der Granulierung von hochwertigen Edelmetallen wie Gold, Silber, Platin, Palladium, Rhodium sowie Legierungen dieser Edelmetalle untereinander oder mit anderen Metallen. Diese Metalle oder Legierungen liegen aus verständlichen Gründen nur in kleinen Mengen vor, so daß für sie nur eine chargenweise Granulierung in Frage kommt, während die bekannten Verfahren zur Granulierung von zum Beispiel Schlacken eine kontinuierliche Granulierung größerer Mengen von Schlacke gewährleisten müssen. Darüber hinaus hat sich bei Versuchen der Erfinder gezeigt, daß es bei der Granulierung von Metallschmelzen, insbesondere bei der Granulierung der zuvor genannten Edelmetalle, beim Eingießen in einen mit Wasser gefüllten Behälter häufig zu heftigen Dampferuptionen und Auswurf des Wasserinhalts des Behälters kommt. Ursache hierfür ist die in der Metallschmelze gespeicherte hohe Wärmemenge und die durch mechanische Rührer nur unzureichende Mischung. Es wurde gefunden, dass einerseits bei herkömmlichen gerührten Granulierbehältern durch den Rührer selbst, der ja einen Teil der Fläche des Behalterbodens beansprucht, ein Teil der Fläche nicht zur Verteilung des erstarrten, aber immer noch heißen Metallgranulates zur Verfügung steht, was zu Metallanhäufungen am Rand des Behälters führte. Es wurde weiter festgestellt, dass bei Rotation des Behälters und herkömmlichem Rühren zwar ein ausgeprägter Rührstrudel entsteht, aber die Strömungsgeschwindigkeit des Wasser sehr gering ist. Da allerdings wegen der größeren Wasserhöhe und der erforderlichen Kühlung der Metallschmelze bevorzugt in den Randbereich des Gefäßes eingegossen wird kommt es so immer wieder zu Anhäufungen des erstarrten, aber immer noch heißen Metallgranulates am Rand des Behälters führte. Da beim Eingießen der Schmelze der Schmelzestrahl nicht an einer Stelle verbleibt sondern sich bewegt wird immer wieder flüssiges Metall in den inneren Bereich des Rührstrudels gegossen und dort zunächst unzureichend gekühlt. In der Summe führen diese Sachverhalte immer wieder zu Anhäufungen von heißem Metallgranulat, wobei das Wasser zwischen den Granulatpartikeln bis zum Verdampfen erhitzt wird und zu lautstarken Dampferuptionen und Auswurf des Wasserinhalts des Behälters führt, zum Teil gemeinsam mit Granulatpartikeln.

### Aufgabe der Erfindung

Es war daher Aufgabe der Erfindung, eine Vorrichtung und ein Verfahren zur Verfügung zu stellen, mit welchem Edelmetalle in verhältnismäßig kleinen Mengen chargenweise mit geringem Aufwand granuliert werden können, ohne daß es zu den beobachteten Dampferuptionen kommt.

### Kurze Beschreibung der Erfindung

Diese Aufgabe wird gelöst mit den in den Ansprüchen definierten Vorrichtungen und Verfahren. Bevorzugte Ausführungsformen der Vorrichtung und des Verfahrens sind in den entsprechenden Unteransprüchen beschrieben.

### Detaillierte Beschreibung der Erfindung

Die Vorrichtung (1) zur Granulierung einer Metallschmelze in Wasser enthält einen runden Wasserbehälter (2) mit einem Behälterboden (3), einer Behälterwand (4), einer Wasserzulaufvorrichtung (5) und mit einem an der Behälterwand in einer gewünschten Höhe über dem Behälterboden (3) angebrachten Wasserablauf (6), wobei die Wasserzulaufvorrichtung (5) ein Verteilerrohr (7) enthält, welches außerhalb des Wasserbehälters (2) angeordnet und mit einer ersten horizontal ausgerichteten Wasserdüse (8) verbunden ist, die von außen oberhalb des Wasserablaufs (6) durch die Behälterwand hindurchgeführt ist und mit welcher Wasser tangential in den Wasserbehälter (2) eindüst werden kann. Die Position des Wasserablaufs (6) am Umfang des Wasserbehälters (2) relativ zur ersten Düse (8) ist so gewählt, daß der Winkelversatz zwischen der ersten Düse (8) und dem Wasserablauf (6) wenigstens 90° beträgt wobei das Verteilerrohr (7) weitere horizontale Wasserdüsen (9, 10, 11,12, 13, 14) unterhalb der ersten Wasserdüse (8) aufweist, die in verschiedenen Höhen über dem Behälterboden (3) verteilt Wasser ebenfalls von außen tangential in den Wasserbehälter (2) eindüsen können und die am Umfang verteilt sind, wobei die tieferen Wasserdüsen (9, 10, 11,12, 13, 14) in Rotationsrichtung des Wassers nach vorne versetzt sind.

Bevorzugt beträgt der Winkelversatz zwischen der ersten Düse (8) und dem Wasserablauf (6) mehr als 180°.

Im Betrieb wird der Behälter mit Wasser gefüllt, welches durch das tangentiale Eindüsen von Wasser in Rotation versetzt wird und dessen Oberfläche daher ein Rotationsparaboloid bildet. Das geschmolzene Metall wird zur Granulierung aus einem Schmelztiegel in den von der ersten Düse gebildeten Wasserkegel oder Wasserfächer eingegossen. Der entstehende Rotationsparaboloid ist dabei im Allgemeinen weniger stark ausgeprägt als der Rührstrudel bei Vorrichtungen mit mechanischer Rührung, so dass auch bei Bewegung des Strahls an geschmolzenem Metall eine sichere Zerteilung des Strahls und Verteilung der entstehenden Granalien sicher gestellt ist. Die ersten Düse (8) befindet sich im Bereich der Wasseroberfläche und erzeugt einen in der Wasseroberfläche liegenden Wasserstrahl oder Wasserfächer.

Diese zusätzlichen Düsen helfen, das Wasser im Wasserbehälter in Rotation zu versetzen und ermöglichen zusätzlich zum radialen Geschwindigkeitsprofil des rotierenden Wassers das vertikale Geschwindigkeitsprofil zu beeinflussen.

Die weiteren Wasserdüsen (9, 10, 11, 12, 13, 14) können zwischen dem Behälterboden und der ersten Wasserdüse (8) ungleichmäßig verteilt sein. Gute Ergebnisse wurden jedoch auch mit einer gleichmäßigen Verteilung der Wasserdüsen erreicht. Darüber hinaus hat es sich als vorteilhaft erwiesen, die Wasserdüsen (9, 10, 11, 12, 13, 14) nicht alle vertikal untereinander anzuordnen, sondern am Umfang des Wasserbehälters bevorzugt in gleichen Abständen beginnend mit der Umfangsposition der ersten Wasserdüse (8) zu verteilen. Zweck dieser Maßnahme ist es, den im Wasser gebildeten Granalien einen ausreichend hohen horizontalen Impuls zu verleihen, so daß sie beim Herabsinken im Behälter in den Eindüsungsbereich der nächst tieferen Düse befördert werden, wobei die Ausbildung der parabolisch geformten Wasseroberfläche bzw. eines Rührstrudels minimiert wird. Dadurch werden die Granalien schnell über ein großes Wasservolumen verteilt. Dies vermindert die Gefahr der Ausbildung von Dampferuptionen. Der optimale Umfangsversatz zwischen zwei benachbarten Düsen hängt im wesentlichen von dem Metall selbst und der Rotationsgeschwindigkeit des Wassers ab und wird bevorzugt durch Versuche ermittelt. Der Umfangsversatz zwischen den Düsen beträgt meist 5 Grad bis 45 Grad, vorteilhaft 10 Grad bis 35 Grad, insbesondere 15 Grad bis 25 Grad. Dabei ist es vorteilhaft, die zweite Düse (9) noch senkrecht unter der ersten Düse (8) anzuordnen, um eine ausreichende horizontale Anfangsbeschleunigung der herabsinkenden Granalien zu erhalten. Durch einen ausreichenden Winkelversatz zwischen der ersten Düse (8) und dem Wasserablauf (6) wird sichergestellt, daß das granulierte Metall nicht in den Wasserablauf gelangen kann. Als weiteren Schutz vor Metallverlusten kann der Wasserablauf (6) noch durch ein Sieb abgedeckt werden. Die Erfahrungen mit der Granuliervorrichtung haben gezeigt, daß der Winkelversatz zwischen erster Düse und Wasserablauf wenigstens 90° betragen sollte. Bevorzugt wird ein Winkelversatz von mehr als 180° verwendet.

Die Anzahl der weiteren Wasserdüsen (9, 10, 11, 12, 13, 14) kann dem gewünschten Granulierergebnis angepaßt werden. Gute Ergebnisse wurden mit 2 bis 10, besonders mit 6 weiteren Wasserdüsen erzielt.

In einer spezifischen Ausgestaltung der Erfindung sind sechs Wasserdüsen (9, 10, 11, 12, 13, 14) in gleichen Abständen beginnend mit der Umfangsposition der ersten Wasserdüse (8) mit einem gleich bleibenden Umfangsversatz verteilt, bei welchem die jeweils tiefere Düse in Rotationsrichtung des Wassers um 10 Grad bis 25 Grad (insbesondere 17 Grad bis 22 Grad) nach vorne versetzt sind und die erste Wasserdüse (8) ohne Umfangsversatz senkrecht oberhalb der zweiten Düse (9) angeordnet ist, wobei der Winkelversatz zwischen erster Düse und Wasserablauf mehr als 180° beträgt.

Die im Wasserbehälter tangential ausgerichteten Düsen sind mit dem Verteilerrohr (7) über Rohrleitungen verbunden, die vom Verteilerrohr am äußeren Umfang des Wasserbeckens bis zur jeweiligen Umfangsposition der Wasserdüsen entlanggeführt und dort durch die Behälterwand hindurchgeführt sind.

Die Düsen können durch die Rohrleitungen selbst gebildet sein und somit eine kreisrunde Düsenöffnung entsprechend dem Querschnitt der Rohrleitungen aufweisen. Bevorzugt werden die Düsenöffnungen jedoch als ovale Öffnungen oder als Schlitzöffnungen mit einer Längsausdehnung ausgeführt, die das Wasser in Form von breiten Fächern dem Wasserbecken zuführen. Bevorzugt ist die Öffnung der ersten Düse (8) so angeordnet, daß der erzeugte Wasserfächer in etwa parallel zur parabolischen Oberfläche des Wassers an der Position der ersten Düse ausgerichtet ist. Hierzu ist die Öffnung der ersten Düse (8) oval oder schlitzförmig ausgebildet und so ausgerichtet, dass die Längsausdehnung der Öffnung der ersten Düse (8) in etwa senkrecht zur Behälterwand ausgerichtet ist, das heißt der von der Längsausdehnung der Öffnung der ersten Düse (8) und der Behälterwand gebildete Winkel kann vorzugsweise etwa 90° bis etwa 135° betragen, insbesondere etwa 100° bis etwa 110°. Im Gegensatz hierzu sind die Öffnungen der weiteren Düsen (8, 9, 10, 11, 12, 13, 14) bevorzugt mit ihrer Längsausdehnung parallel zur Behälterwand ausgerichtet.

Zur Einstellung des vertikalen Geschwindigkeitsprofils ist es vorteilhaft, jeder Düse (8, 9, 10, 11, 12, 13, 14) ein Ventil (18) zwischen Düsenöffnung und Verteilerrohr (7) zur Einstellung des Wassermassendurchflusses zuzuordnen.

Die Wasserversorgung des Wasserbehälters wird bevorzugt als Kreislaufsystem ausgeführt. Zu diesem Zweck kann der Wasserablauf (6) des Wasserbehälters über eine Rücklaufleitung (17) mit dem Ansaugstutzen einer Wasserpumpe (18) verbunden werden, deren Druckstutzen über eine Vorlaufleitung (19) die Wasserzulaufvorrichtung (5) mit Wasser versorgt und somit den Kreislauf schließt. Der Wasserablauf (6) ist gemäß der Erfindung nicht am Boden des Wasserbehälters angebracht, sondern gegenüber dem Boden (3) des Behälters erhöht, vorteilhaft mindestens auf der Hälfte der Höhe zwischen dem Boden (3) des Wasserbehälters und der Wasseroberfläche im abgeschalteten Zustand, insbesondere in der oberen Hälfte der Höhe zwischen dem Boden (3) des Wasserbehälters und der Wasseroberfläche im abgeschalteten Zustand. In einer besonders vorteilhaften Ausgestaltung befindet sich der Wasserablauf (6) im oberen Drittel der Höhe zwischen dem Boden (3) des Wasserbehälters und der Wasseroberfläche im abgeschalteten Zustand. Die Anordnung des Wasserablaufs (6) nahe der Wasseroberfläche stellt sicher, dass das am stärksten erwärmte Wasser abgesaugt wird. Vorteilhaft ist wie oben beschrieben die Wasserversorgung des Wasserbehälters als Kreislaufsystem ausgeführt, wobei das am stärksten erwärmte Wasser abgesaugt und besonders vorteilhaft gekühlt wird, bevor es erneut dem Wasserbehälter zugeführt wird. Dies kann durch eine passive Kühlung oder ein aktive Kühlung geschehen, also Zufuhr eines Kühlmediums wie Gas oder eine Kühlflüssigkeit. Das zu kühlende Wasser wird zur Kühlung vorteilhaft durch einen Wärmetauscher wird.

Meist ist es jedoch ausreichend, die Rücklaufleitung (17), und die Vorlaufleitung (19), welche die Wasserpumpe (18) mit dem Wasserbehälter (2) verbinden, länger auszuführen und diese Leitungen bzw. Schläuche passiv zu kühlen, also den Wärmeaustausch mit der Umgebung zu gestatten.

In einer weiteren spezifischen Ausgestaltung der Erfindung sind sechs Wasserdüsen (9, 10, 11, 12, 13, 14) in gleichen Abständen beginnend mit der Umfangsposition der ersten Wasserdüse (8) mit einem gleich bleibenden Umfangsversatz verteilt, bei welchem die jeweils tiefere Düse in Rotationsrichtung des Wassers um 10 Grad bis 25 Grad (insbesondere 17 Grad bis 22 Grad) nach vorne versetzt sind und die erste Wasserdüse (8) ohne Umfangsversatz senkrecht oberhalb der zweiten Düse (9) angeordnet ist, wobei der Winkelversatz zwischen erster Düse und Wasserablauf (6) mehr als 180° beträgt und sich der Wasserablauf (6) im oberen Drittel der Höhe zwischen dem Boden (3) des Wasserbehälters und der Wasseroberfläche im abgeschalteten Zustand befindet. Ganz besonders vorteilhaft ist diese spezifische Ausgestaltung der Erfindung, wenn die Rücklaufleitung (17) und die Vorlaufleitung (19), welche die Wasserpumpe (18) mit dem Wasserbehälter (2) verbinden, länger ausgeführt sind und diese Leitungen bzw. Schläuche passiv gekühlt werden, also der Wärmeaustausch mit der Umgebung möglich ist.

Die Qualität des verwendeten Wassers sollte der von Trinkwasser entsprechen, so wie es als Leitungswasser von Wasserversorgungsunternehmen zur Verfügung gestellt wird. Ansonsten werden an das Wasser keine besonderen Anforderungen gestellt.

Mit der beschriebenen Vorrichtung können Edelmetalle in kleinen Chargen von 10 bis 50 kg granuliert werden. Hierzu wird der Wasserbehälter (2) zunächst mit Wasser befüllt. Die ersten Düse (8) befindet sich im Bereich der Wasseroberfläche und soll einen in der Wasseroberfläche liegenden Wasserstrahl oder Wasserfächer erzeugen. Dann wird das Wasser im Becken in Rotation versetzt, indem eine Teilmenge des Wassers im Kreis geführt und mit Hilfe einer Pumpe (18) und wenigstens einer Düse (8) tangential in den Wasserbehälter (2) eingedüst wird, wobei die Oberfläche des rotierenden Wassers im Behälter die Form eines Rotationsparaboloids (16) annimmt. Durch entsprechende Mengenregulierung des Wasserzulaufs kann die Rotationsgeschwindigkeit des Wassers so eingestellt werden, daß der Wasserspiegel (15) an der Behälterwand etwa bis zur Position der ersten Düse (8) ansteigt und die von der ersten Düse zugeführte Wassermenge in Form eines Fächers parallel zur parabolischen Oberfläche eingedüst wird. Typischerweise beträgt die Umfangsgeschwindigkeit des Wassers in der Nähe der Behälterwand etwa 0,5 bis 10 m/s. Das geschmolzene Metall wird dann durch Kippen des Schmelztiegels in einem kontinuierlichen Strahl in den Wasserfächer der ersten Düse gegossen bis der Schmelztiegel entleert ist. Die Gießgeschwindigkeit liegt bevorzugt im Bereich zwischen 10 und 30 kg/min. Dabei sollte darauf geachtet werden, daß der Schmelzstrahl möglichst immer an derselben Stelle auf den Wasserfächer der ersten Düse (8) trifft. Dies geschieht vorzugsweise möglichst nah an der Behälterwand (4). Die Temperatur der Schmelze sollte 100 bis 300 °C über der Schmelztemperatur des Metalls liegen.

Bevorzugt wird das Wasser nicht nur mit einer Düse in den Wasserbehälter eingedüst, sondern mit mehreren Düsen (8, 9, 10, 11, 12, 13, 14), die in der Höhe und am Umfang des Wasserbehälters verteilt angeordnet sind.

Die Wassertemperatur vor Beginn der Granulierung sollte zwischen 10 und 30 °C liegen. Die für das Verfahren eingesetzte Wassermasse ist bevorzugt etwa 5 bis 50 mal so groß wie die zu granulierende Masse der Metallschmelze im Schmelztiegel. Dieses Massenverhältnis gewährleistet, daß sich das Wasser durch die vom Metall an das Wasser abgegebene Wärme nicht übermäßig erwärmt. Die im Kreis geführte Teilmenge des Wassers sollte so bemessen sein, daß die Gesamtmenge des Wassers in etwa 0,5 bis 5 Minuten einmal vollständig umgewälzt wird.

Nachdem die gesamte Metallschmelze ausgegossen ist, wird der Wasserkreislauf gestoppt, das Wasser im Behälter abgelassen oder abgepumpt und das gebildete Metallgranulat aus dem Behälter entnommen.

Mit dem beschriebenen Verfahren ist es möglich, die genannten Edelmetalle sicher und kostengünstig zu granulieren. Die Kornverteilung des Granulats kann in weiten Grenzen den Anwendungserfordernissen angepaßt werden. Dies geschieht durch Wahl der Gießgeschwindigkeit für die Metallschmelze, der Rotationsgeschwindigkeit des Wassers im Behälter und insbesondere der Geschwindigkeit, mit welcher das Wasser von der ersten Düse dem Behälter zugeführt wird. Bei hoher Geschwindigkeit des zugeführten Wassers werden im Wesentlichen kompakte, nahezu kugelförmige Granalien mit Korngrößen zwischen etwa 0,5 und 5 mm erhalten, die sich gut für die Dosierung bei der Herstellung von Legierungen eignen. Bei geringerer Geschwindigkeit liefert das Verfahren dagegen große Granalien mit zerklüfteter Oberfläche, die vorteilhaft sind, wenn sie zum Beispiel durch Laugungsprozesse weiterbehandelt werden sollen. Bevorzugt liegt die Austrittsgeschwindigkeit des Wassers aus der ersten Düse (8) zwischen 5 und 15 m/s, je nach gewünschtem Granulierergebnis.

### Beschreibung der Zeichnungen

Die Erfindung wird im folgenden mit Hilfe der Figuren 1 bis 4 näher erläutert. Es zeigen:
- **Figur 1:**: Seitenansicht der Vorrichtung zur Granulierung einer Metallschmelze mit Wasserzulauf und Wasserablauf sowie Verteilerrohr
- **Figur 2:**: Sicht von oben in den Wasserbehälter mit der Anordnung der Wasserdüsen am Umfang des Wasserbehälters
- **Figur 3:**: Schnittansicht A-A durch den Wasserbehälter mit der vertikalen Anordnung der Wasserdüsen
- **Figur 4:**: Schematische Darstellung des Wasserkreislaufs der Granuliervorrichtung

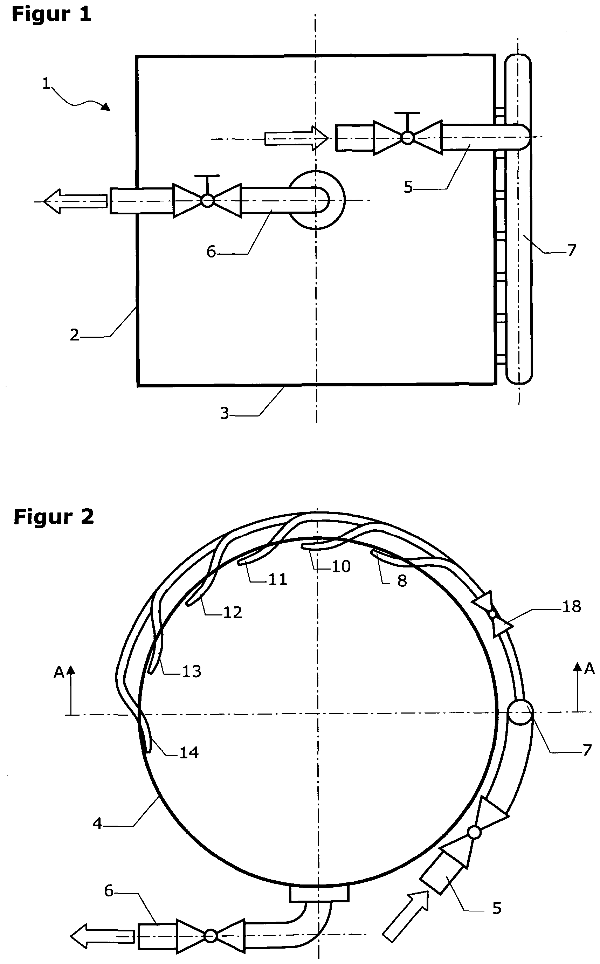

Figur 1 zeigt eine Vorrichtung (1) für die Granulierung von 1 bis 50 kg Edelmetall. Der Wasserbehälter (2) kann eine Nutzwassermenge von etwa 350 kg fassen. Der Wasserbehälter (2) ist mit einer Wasserzulaufvorrichtung (5) ausgerüstet, die ein Verteilerrohr (7) enthält, welches außerhalb des Wasserbehälters (2) senkrecht angeordnet ist und die hier nicht gezeigten Düsen mit Wasser versorgt, die von außen durch die Behälterwand (4) hindurchgeführt sind und Wasser tangential in den Wasserbehälter (2) eindüsen können. Unterhalb einer ersten Wasserdüse (8) ist ein Wasserablauf (6) angeordnet, um einen kontinuierlichen Kreislauf des Wassers zu ermöglichen. Wasserzulauf und Wasserablauf enthalten jeweils eine Ventil zur Regulierung der Durchflußmenge.

Figur 2 zeigt eine Ansicht auf die Granuliervorrichtung (1) von oben in den Wasserbehälter (2). Die Rohrleitungen zur Versorgung der Düsen (8, 9, 10, 11, 12, 13 und 14) mit Wasser sind außerhalb des Wasserbehälters horizontal um den Wasserbehälter herumgeführt. An den gewünschten Umfangsstellen sind die Rohrleitungen durch die Behälterwand (4) hindurchgeführt und münden in die tangential zur Behälterwand angeordneten Düsen.

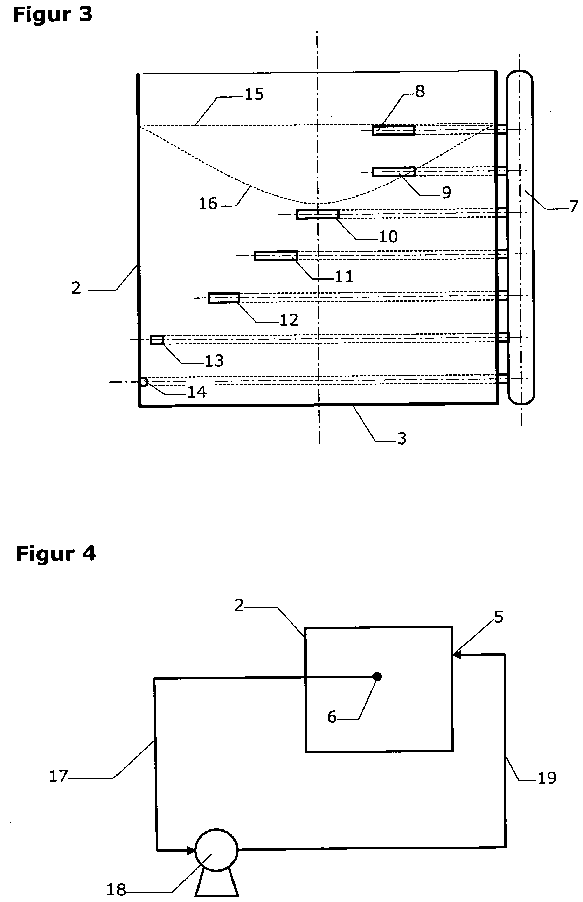

Figur 3 zeigt einen senkrechten Schnitt durch die Vorrichtung (1) in Richtung A-A von Figur 2. Figur 3 zeigt die Ausbildung der parabolischen Wasserfläche (16) im Betrieb der Vorrichtung. Der Rand (15) dieser Wasserfläche an der Behälterwand wird durch die Geschwindigkeit des Wasserzulaufs so eingestellt, daß er etwa bis an die oberste Düse (8) heranreicht oder leicht darüber hinaus ansteigt. Die weiteren Düsen werden in verschiedenen Höhen unterhalb der ersten Düse angeordnet, um das vertikale Geschwindigkeitsprofil des rotierenden Wassers einstellen zu können.

Figur 4 zeigt eine schematische Darstellung des schon beschriebenen Wasserkreislaufs der Granuliervorrichtung mit Hilfe der Wasserpumpe (18), deren Saugstutzen über die Wasserleitung (17) mit dem Wasserablauf (6) des Wasserbehälters (2) verbunden ist und deren Druckstutzen über die Wasserleitung (19) den Wasserzulauf (5) des Wasserbehälters mit Wasser versorgt.

### Beispiel

Zur Granulation von 25 kg Platin wurde ein Wasserbehälter aus Edelstahl mit einem Durchmesser von 85 cm und einer Höhe von 80 cm angefertigt. Wie in Figur 3 gezeigt, wurde der Behälter mit einer obersten Wasserdüse (8) und 6 weiteren Wasserdüsen ausgerüstet. Die weiteren Wasserdüsen wurden von oben nach unten um jeweils 20 Winkelgrade in Rotationsrichtung des Wassers zueinander versetzt.

Der Wasserbehälter wurde mit 300 Liter Leitungswasser mit einer Temperatur von 10 °C befüllt. Durch Einschalten der Pumpe (18) mit einer Förderleistung von 50 m³/h wurde das Wasser in Rotation versetzt bis der obere Rand des Wassers an der Behälterwand bis auf die Höhe der ersten Düse (8) gestiegen war. Dann wurde das geschmolzene und auf 2000 °C erhitzte Platin mit einer Rate von 20 kg/min in den von der ersten Wasserdüse (8) erzeugten Wasserfächer eingegossen. Die Granulation verlief problemlos ohne jegliche Dampferuptionen. Nach Beendigung des Eingießens wurde das Wasser abgepumpt und das Platingranulat aus dem Behälter entnommen.

### Vergleichsbeispiel

Zur Granulation von 25 kg Platin wurde ein Wasserbehälter aus Edelstahl mit einem Durchmesser von 85 cm und einer Höhe von 80 cm angefertigt. Der Wasserbehälter wurde gerührt von einem mechanischen Rührer, welcher von oben an einer Welle in den Wasserbehälter hineinragte und dessen Rührelement am unteren Ende der Welle befestigt und von einem externen Motor angetrieben wurde. Wie in Figur 3 gezeigt, wurde der Behälter mit einer obersten Wasserdüse (8) ausgerüstet. Weitere Wasserdüsen waren nicht vorhanden.

Der Wasserbehälter wurde mit 300 Liter Leitungswasser mit einer Temperatur von 10 °C befüllt. Durch Einschalten des Rührers wurde das Wasser gerührt und in Rotation versetzt bis der obere Rand des Wassers an der Behälterwand bis auf die Höhe der ersten Düse (8) gestiegen war und die Pumpe (18) eingeschaltet. Hierbei zeigte sich ein ausgeprägter Rührstrudel. Dann wurde das geschmolzene und auf 2000 °C erhitzte Platin mit einer Rate von 20 kg/min in den von der ersten Wasserdüse (8) erzeugten Wasserfächer eingegossen und von diesem zerteilt. Beim Umrühren entstanden immer wieder Anhäufungen von Platingranulat am Boden des Wasserbehälters nahe der Eingießstelle. Es kam wiederholt zu Dampferuptionen unter lautstarker Geräuschentwicklung, wobei Wasser und auch Platinmetall aus dem Wasserbehälter geschleudert wurden. Nach Beendigung des Eingießens wurde das Wasser abgepumpt und das Platingranulat aus dem Behälter entnommen bzw.

## Patentansprüche

1. Vorrichtung (1) zur Granulierung einer Edelmetallschmelze in Wasser, enthaltend einen runden Wasserbehälter (2) mit einem Behälterboden (3), einer Behälterwand (4), einer Wasserzulaufvorrichtung (5) und mit einem an der Behälterwand in einer gewünschten Höhe über dem Behälterboden (3) angebrachten Wasserablauf (6), wobei die Wasserzulaufvorrichtung (5) ein Verteilerrohr (7) enthält, welches außerhalb des Wasserbehälters (2) angeordnet und mit einer ersten horizontal ausgerichteten Wasserdüse (8) verbunden ist, die von außen oberhalb des Wasserablaufs (6) durch die Behälterwand hindurchgeführt ist und mit welcher Wasser tangential in den Wasserbehälter (2) eindüst werden kann, wobei die Position des Wasserablaufs (6) am Umfang des Wasserbehälters (2) relativ zur ersten Düse (8) so gewählt ist, daß der Winkelversatz zwischen der ersten Düse (8) und dem Wasserablauf (6) wenigstens 90° beträgt **dadurch gekennzeichnet, daß** das Verteilerrohr (7) weitere horizontale Wasserdüsen (9, 10, 11,12, 13, 14) unterhalb der ersten Wasserdüse (8) aufweist, die in verschiedenen Höhen über dem Behälterboden (3) verteilt Wasser ebenfalls von außen tangential in den Wasserbehälter (2) eindüsen können, und die am Umfang verteilt sind, wobei die tieferen Wasserdüsen (9, 10, 11,12, 13, 14) in Rotationsrichtung des Wassers nach vorne versetzt sind.

2. Vorrichtung nach Anspruch 1, **dadurch gekennzeichnet, daß** die weiteren Wasserdüsen (9, 10, 11, 12, 13, 14) in verschiedenen Höhen über dem Behälterboden (3) und entlang des Umfangs der Behälterwand (4) verteilt Wasser von außen tangential in den Wasserbehälter (2) eindüsen können.

3. Vorrichtung nach Anspruch 2, **dadurch gekennzeichnet, daß** die weiteren Wasserdüsen (9, 10, 11, 12, 13, 14) am Umfang in gleichen Abständen beginnend mit der Umfangsposition der ersten Wasserdüse (8) verteilt angeordnet sind.

4. Vorrichtung nach Anspruch 3, **dadurch gekennzeichnet, daß** neben der ersten Wasserdüse (8) 2 bis 10 weitere Wasserdüsen vorhanden sind.

5. Vorrichtung nach Anspruch 3, **dadurch gekennzeichnet, dass** die weiteren Wasserdüsen (9, 10, 11, 12, 13, 14) am Umfang in gleichen Abständen um jeweils 5 Grad bis 45 Grad, vorteilhaft 10 Grad bis 35 Grad, insbesondere 15 Grad bis 25 Grad zueinander versetzt angeordnet sind.

6. Vorrichtung nach einem der vorstehenden Ansprüche, **dadurch gekennzeichnet, dass** die zweite Düse (9) senkrecht unter der ersten Düse (8) angeordnet ist.

7. Vorrichtung nach einem der vorstehenden Ansprüche, **dadurch gekennzeichnet, daß** die Düsenöffnungen der Wasserdüsen (8, 9, 10, 11, 12, 13, 14) durch ovale Öffnungen oder Schlitze mit einer Längsausdehnung gebildet sind, die Wasser in Form von breiten Fächern dem Wasserbehälter (2) zuführen können.

8. Vorrichtung nach einem der vorstehenden Ansprüche, **dadurch gekennzeichnet, dass** der von der Längsausdehnung der Öffnung der ersten Düse (8) und der Behälterwand gebildete Winkel etwa 90° bis etwa 135°, insbesondere etwa 100° bis etwa 110° beträgt.

9. Vorrichtung nach Anspruch 1, **dadurch gekennzeichnet, daß** das Wasser zur Granulierung einer Edelmetallschmelze im Kreis geführt werden kann, indem der Wasserablauf (6) des Wasserbehälters (2) über eine Rücklaufleitung (17) mit einem Ansaugstutzen einer Wasserpumpe (18) verbunden ist, deren Druckstutzen über eine Vorlaufleitung (19) die Wasserzulaufvorrichtung (5) mit Wasser versorgt.

10. Vorrichtung nach Anspruch 9, **dadurch gekennzeichnet, dass** der Wasserablauf (6) mindestens auf der Hälfte der Höhe, vorteilhaft in der oberen Hälfte der Höhe, insbesondere im oberen Drittel der Höhe zwischen dem Boden (3) des Wasserbehälters und der Wasseroberfläche im abgeschalteten Zustand angeordnet ist.

11. Vorrichtung nach Anspruch 9 oder 10, **dadurch gekennzeichnet, dass** das Wasser abgesaugt und gekühlt wird, bevor es erneut dem Wasserbehälter zugeführt wird.

12. Verfahren zur Granulierung einer Edelmetallschmelze in einer Vorrichtung nach einem der Ansprüche 1 bis 11, **dadurch gekennzeichnet, daß** der runde Wasserbehälter (2) mit Wasser befüllt und das Wasser im Behälter in Rotation versetzt wird, indem eine Teilmenge des Wassers im Kreis geführt und in der Höhe und am Umfang des Wasserbehälters verteilt mit Hilfe der Wasserdüsen (8, 9, 10, 11,12, 13, 14) tangential in den Wasserbehälter eingedüst wird, wobei das rotierende Wasser eine parabolisch geformte Oberfläche (16) annimmt und die erste Düse (8) an der Behälterwand so befestigt ist, daß sie das Wasser in einem breiten Fächer nahe der parabolischen Oberfläche (16) dem Wasserbehälter zuführt und wobei die Edelmetallschmelze aus einem Schmelztiegel in einem ununterbrochenen Strahl in den von der ersten Wasserdüse gebildeten Wasserfächer gegossen wird bis der Schmelztiegel entleert ist.

13. Verfahren nach Anspruch 12, **dadurch gekennzeichnet, daß** die für das Verfahren eingesetzte Wassermasse etwa 5 bis 50 mal so groß ist wie die zu granulierende Masse der Edelmetallschmelze im Schmelztiegel.

14. Verwendung einer Vorrichtung nach einem der Ansprüche 1 bis 11 zur Granulierung von Edelmetalle.

## Claims

1. Device (1) for granulating a precious metal melt in water, containing a round water tank (2) having a tank floor (3), a tank wall (4), and a water feed device (5), and having a water outlet (6) attached to the tank wall at a desired height above the tank floor (3), wherein the water feed device (5) contains a manifold (7), which is arranged outside the water tank (2) and connected to a first, horizontally-aligned water nozzle (8), which is guided from outside, above the water outlet (6), through the tank wall and with which water can be injected tangentially into the water tank (2), wherein the position of the water outlet (6) on the circumference of the water tank (2), relative to the first nozzle (8), is selected such that the angular offset between the first nozzle (8) and the water outlet (6) is at least 90°, **characterized in that** the manifold (7) has, below the first water nozzle (8), additional horizontal water nozzles (9, 10, 11, 12, 13, 14), which can also tangentially inject water from outside into the water tank (2) in a manner distributed at various heights above the tank floor (3) and which are distributed on the circumference, wherein the lower water nozzles (9, 10, 11, 12, 13, 14) are offset towards the front in the direction of rotation of the water.

2. Device according to claim 1, **characterized in that** the additional water nozzles (9, 10, 11, 12, 13, 14) can tangentially inject water from outside into the water tank (2) in a manner distributed at various heights above the tank floor (3) and along the circumference of the tank wall (4).

3. Device according to claim 2, **characterized in that** the additional water nozzles (9, 10, 11, 12, 13, 14) are arranged in a manner distributed on the circumference at equal intervals, starting from the circumferential position of the first water nozzle (8).

4. Device according to claim 3, **characterized in that** from 2 to 10 additional water nozzles are available, in addition to the first water nozzle (8).

5. Device according to claim 3, **characterized in that** the additional water nozzles (9, 10, 11, 12, 13, 14) are arranged on the circumference at equal intervals in a manner offset in relation to each other by, respectively, 5 degrees to 45 degrees, and, advantageously, by 10 degrees to 35 degrees - in particular, by 15 degrees to 25 degrees.

6. Device according to one of the preceding claims, **characterized in that** the second nozzle (9) is arranged vertically below the first nozzle (8).

7. Device according to one of the preceding claims, **characterized in that** the nozzle openings of the water nozzles (8, 9, 10, 11, 12, 13, 14) are formed with a longitudinal extension by oval openings or slots, which can feed water in the form of a broad fan into the water tank (2).

8. Device according to one of the preceding claims, **characterized in that** the angle formed by the longitudinal extension of the opening of the first nozzle (8) and the tank wall is ca. 90° to ca. 135° - in particular, ca. 100° to ca. 110°.

9. Device according to claim 1, **characterized in that** the water for granulating a precious metal melt can be circulated by connecting the water outlet (6) of the water tank (2) via a return line (17) to an intake port of a water pump (18), the discharge port of which supplies water to the water feed device (5) via a feed line (19).

10. Device according to claim 9, **characterized in that,** in the turned-off state, the water outlet (6) is arranged at least at half of the height, and, preferably, in the upper half of the height - in particular, in the upper third of the height - between the floor (3) of the water tank and the water surface.

11. Device according to claim 9 or 10, **characterized in that** the water is drawn off and cooled before it is once again fed into the water tank.

12. Method for granulating a precious metal melt in a device according to one of claims 1 through 11, **characterized in that** the round water tank (2) is filled with water, and the water is caused to rotate in the tank by a partial quantity of the water being circulated and tangentially injected into the water tank using the water nozzles (8, 9, 10, 11, 12, 13, 14) at the height of and distributed on the circumference of the water tank, wherein the rotating water assumes a parabolically-shaped surface (16), and the first nozzle (8) is mounted on the tank wall such that it feeds the water in a broad fan into the water tank near the parabolic surface (16), and wherein the precious metal melt is poured from a melting crucible in a continuous stream into the water fan formed by the first water nozzle, until the melting crucible is emptied.

13. Method according to claim 12, **characterized in that** the quantity of water used for the method is approximately 5 to 50 times as large as the mass of the precious metal melt in the melting crucible to be granulated.

14. Use of a device according to one of claims 1 through 11 for granulating precious metals.

## Revendications

1. Dispositif (1) pour la granulation, dans l'eau, d'une masse fondue de métal précieux, contenant un récipient (2) à eau rond, pourvu d'un fond (3) de récipient, d'une paroi (4) de récipient, d'un dispositif (5) d'alimentation en eau et d'une évacuation (6) d'eau disposée au niveau de la paroi du récipient à une hauteur souhaitée au-dessus du fond (3) du récipient, le dispositif (5) d'alimentation en eau contenant un tuyau (7) de distribution, qui est disposé en dehors du récipient (2) à eau et qui est raccordé à une première buse (8) à eau agencée horizontalement, qui est passée à partir de l'extérieur, au-dessus de l'évacuation (6) d'eau, à travers la paroi du récipient et qui permet d'injecter de l'eau tangentiellement dans le récipient (2) à eau, la position de l'évacuation (6) d'eau, au niveau de la périphérie du récipient (2) à eau, étant choisie, par rapport à la première buse (8), de manière telle que le décalage angulaire entre la première buse (8) et l'évacuation (6) d'eau soit d'au moins 90°, **caractérisé en ce que** le tuyau (7) de distribution présente d'autres buses (9, 10, 11, 12, 13, 14) à eau horizontales sous la première buse (8) à eau, qui peuvent également injecter de l'eau tangentiellement à partir de l'extérieur dans le récipient (2) à eau, réparties à différentes hauteurs au-dessus du fond (3) du récipient et qui sont réparties au niveau de la périphérie, les buses (9, 10, 11, 12, 13, 14) à eau plus profondes étant décalées vers l'avant dans le sens de rotation de l'eau.

2. Dispositif selon la revendication 1, **caractérisé en ce que** les autres buses (9, 10, 11, 12, 13, 14) à eau peuvent injecter de l'eau tangentiellement à partir de l'extérieur dans le récipient (2) à eau à différentes hauteurs au-dessus du fond (3) du récipient et de manière répartie le long de la périphérie de la paroi (4) de récipient.

3. Dispositif selon la revendication 2, **caractérisé en ce que** les autres buses (9, 10, 11, 12, 13, 14) à eau sont disposées au niveau de la périphérie de manière répartie à des distances identiques, en commençant par la position périphérique de la première buse (8) à eau.

4. Dispositif selon la revendication 3, **caractérisé en ce que** de 2 à 10 autres buses à eau sont présentes en plus de la première buse (8) à eau.

5. Dispositif selon la revendication 3, **caractérisé en ce que** les autres buses (9, 10, 11, 12, 13, 14) à eau sont disposées au niveau de la périphérie à des distances identiques, de manière décalée les unes par rapport aux autres à chaque fois de 5 degrés à 45 degrés, avantageusement de 10 degrés à 35 degrés, en particulier de 15 degrés à 25 degrés.

6. Dispositif selon l'une des revendications précédentes, **caractérisé en ce que** la deuxième buse (9) est disposée à la verticale sous la première buse (8).

7. Dispositif selon l'une des revendications précédentes, **caractérisé en ce que** les ouvertures de buse des buses (8, 9, 10, 11, 12, 13, 14) à eau sont formées par des ouvertures ovales ou des fentes présentant une extension longitudinale, qui peuvent introduire l'eau sous forme de larges éventails dans le récipient (2) à eau.

8. Dispositif selon l'une des revendications précédentes, **caractérisé en ce que** l'angle formé par l'extension longitudinale de l'ouverture de la première buse (8) et la paroi du récipient est d'environ 90° à environ 135°, en particulier d'environ 100° à environ 110°.

9. Dispositif selon la revendication 1, **caractérisé en ce que** l'eau destinée à la granulation d'une masse fondue de métal précieux peut être guidée en circulation, **en ce que** l'évacuation (6) d'eau du récipient (2) à eau est raccordée, via une conduite (17) de retour, à une tubulure d'aspiration d'une pompe (18) à eau, dont la tubulure de pression alimente en eau le dispositif (5) d'alimentation en eau via une conduite d'admission (19).

10. Dispositif selon la revendication 9, **caractérisé en ce que** l'évacuation (6) d'eau est disposée au moins à la moitié de la hauteur, de préférence dans la moitié supérieure de la hauteur, en particulier dans le tiers supérieur de la hauteur, entre le fond (3) du récipient à eau et la surface de l'eau dans l'état débranché.

11. Dispositif selon la revendication 9 ou 10, **caractérisé en ce que** l'eau est aspirée et refroidie avant de l'introduire de nouveau dans le récipient à eau.

12. Procédé pour la granulation d'une masse fondue de métal précieux dans un dispositif selon l'une des revendications 1 à 11, **caractérisé en ce que** le récipient (2) à eau rond est rempli d'eau et l'eau est mise en rotation dans le récipient, **en ce qu'**une quantité partielle de l'eau est guidée en circulation et injectée tangentiellement dans le récipient à eau à une certaine hauteur et de manière répartie à la périphérie du récipient à eau à l'aide de buses (8, 9, 10, 11, 12, 13, 14) à eau, l'eau en rotation adoptant une surface (16) de forme parabolique et la première buse (8) étant fixée à la paroi du récipient de manière telle qu'elle introduit l'eau sous forme d'un large éventail à proximité de la surface (16) parabolique dans le récipient à eau et la masse fondue de métal précieux étant coulée à partir d'un creuset de fusion, en un jet ininterrompu, dans l'éventail d'eau formé par la première buse à eau, jusqu'à ce que le creuset de fusion soit vide.

13. Procédé selon la revendication 12, **caractérisé en ce que** la masse d'eau utilisée pour le procédé est environ 5 à 50 fois plus grande que la masse à granuler de masse fondue de métal précieux dans le creuset de fusion.

14. Utilisation d'un dispositif selon l'une des revendications 1 à 11, pour la granulation de métaux précieux.
